# EUROPEAN PATENT SPECIFICATION

(11) **EP 1 701 028 B1**
(45) Date of publication and mention of the grant of the patent: **16.04.2014**
(21) Application number: 06250596.1
(22) Date of filing: 03.02.2006
(51) Int. Cl.: F02K 1/82, F02C 7/045, G10K 11/00

(54) **Acoustic liner with a nonuniform depth backwall**
Akustischer Einsatz für eine Rückwand mit nichteinheitlicher Tiefe
Revêtement acoustique pour une paroi postérieure d'une profondeur non-uniforme

(30) Priority: 03.02.2005 US 49775
(43) Date of publication of application: 13.09.2006
(73) Proprietor: United Technologies Corporation, Hartford, CT 06101 (US)
(72) Inventor: Patrick, William P., Glastonbury, CT 06033 (US)
(74) Representative: Leckey, David Herbert

(56) References cited:
- EP-A- 1 411 225
- WO-A-03/106263
- FR-A- 2 105 235
- FR-A- 2 283 322
- FR-A- 2 482 663
- FR-A- 2 674 362
- GB-A- 899 685
- US-A- 3 913 702
- US-A- 4 137 992
- US-A- 5 498 127

## Description

### Technical Field

This invention relates to noise attenuating liners for fluid handling ducts such as the inlet and exhaust ducts of turbine engines. Exemplary prior art noise attenuation liners are disclosed in FR 2674362 and US 3913702.

### Background of the Invention

Turbine engines, such as those used for aircraft propulsion, include an inlet duct for delivering air to the engine and an exhaust duct for discharging combustion products to the atmosphere. During operation, the engine generates noise that propagates to the environment through the open ends of the ducts. Because the noise is objectionable, engine manufacturers install acoustic liners on portions of the interior walls of the ducts. A commonly used type of acoustic liner features an array of resonator chambers sandwiched between a perforated face sheet and an imperforate backwall. The liner is installed in the duct so that the face sheet defines a portion of the interior wall surface and is exposed to the air or combustion products flowing through the duct. Acoustic liners are designed to reduce the amplitude of the noise across a bandwidth of frequencies referred to as the design frequency band.

Acoustic liners are not completely effective. Noise at frequencies outside the design frequency band are unaffected by the liner. Even noise within the design frequency band persists, albeit at a reduced amplitude. The residual noise, whether attenuated or not, can be reflected by the liner. Some of the noise decays too rapidly with distance to propagate outside the ducts. These decay susceptible noise modes are referred to as "cut-off" modes and are not of concern. Other noise modes are decay resistant and can easily propagate long distances. These are referred to as "cut-on" modes. If a decay resistant noise signal strikes the liner at a shallow enough angle, the noise signal can reflect at a similar shallow angle and can propagate out of the duct.

One way to attenuate the cut-on modes is to regulate the direction in which the liner reflects those modes. For example, if a decay resistant noise signal strikes the liner at a shallow angle, and does so far from the open end of the duct (i.e. remote from the intake plane of an inlet duct or remote from the exhaust plane of an exhaust duct) it could be beneficial to reflect that signal at a steeper angle, i.e. in a less axial direction. The principal benefit of the steeper reflection angle is that it causes the noise signal to experience repeated reflections off the liner as the signal propagates toward the open end of the duct. This is beneficial because each interaction with the liner further attenuates the noise signal, provided the frequency of the signal is within the design frequency band of the liner. Moreover, the reflected signal decays exponentially with distance due to the inability of sound at that frequency to propagate in the duct at that angle.

It may also be beneficial to reflect a noise signal into a direction more axial than the direction of the incident signal. For example if a noise signal strikes the liner close to the open end of the duct (i.e. near the intake plane of an inlet duct or near the exhaust plane of an exhaust duct) the axial distance between the point of incidence and the open end of the duct may be too small to intercept a reflected signal, even one reflected at a steep angle. Therefore, it may be more beneficial to reflect that signal in a more axial direction. This is because noise that propagates axially from an aircraft engine spreads out over a larger area before reaching the ground than does noise that propagates nonaxially from the engine. The resulting wider distribution of the noise reduces its amplitude, making it less disturbing to observers on the ground.

One known way to regulate the angle of reflection is to employ an active backwall. An active backwall includes vibratory elements such as piezoelectric flat panel actuators. A control system responds to acoustic sensors deployed on the liner by signaling the actuators to vibrate at an amplitude and a phase angle (relative to an incident noise signal) that causes the impedance of the liner to vary with time and to do so in a way that optimizes attenuation of an incident noise signal. However such liners are not completely satisfactory because their capability is limited by the power available to drive the actuators. Moreover, the active backwall introduces unwelcome weight, cost and complexity.

In principle, an engine designer can orient the entire liner (i.e the face sheet and the backwall) so that the liner reflects incident noise signals in one or more desired directions. However doing so is almost always impractical because the interior shape of the duct is governed by aerodynamic considerations. Because the liner face sheet defines at least part of the contour of the duct interior wall, orienting the entire liner to regulate the direction of reflected noise will almost always compromise the aerodynamic performance of the duct.

What is needed is a way to redirect reflected noise in a duct without introducing undue weight, cost or complexity and without jeopardizing the aerodynamic performance of the duct.

### Summary of the invention

It is, therefore, an object of the invention to redirect reflected noise in a duct without introducing undue weight, cost or complexity and without jeopardizing the aerodynamic performance of the duct.

According to the invention, a fluid handling duct includes an acoustic liner, as set forth in claim 1.

In one embodiment of the invention, the backwall comprises a ramp. In another embodiment, the backwall comprises a series of steps offset from the face sheet by different depths.

The foregoing and other features of the various embodiments of the invention will become more apparent from the following description of some preferred embodiments of the invention and the accompanying drawings.

### Brief Description of the Drawings

Figure **1** is a schematic view of a gas turbine engine inlet duct including an acoustic liner taken in the direction **1-1** of Figure **2****,** i.e. looking parallel to the duct axis.
Figure **2** is a cross sectional side elevation view in the direction **2-2** of Fig. **1****.**
Figure **3** is an enlarged view of the region **3-3** of Figure **2** showing an embodiment of the inventive acoustic liner featuring a ramped backwall.
Figure **4** is a schematic view illustrating a definition of the relative inclinations of a face sheet and a backwall inclined more toward a noise source than the face sheet is inclined toward the noise source.
Figure **5** is a top view looking in the direction **5-5** of Fig. **1****.**
Figure **6** is an enlarged view of the region **6-6** of Figure **5** showing an embodiment of the inventive acoustic liner featuring a ramped backwall.
Figure **7** is a schematic view illustrating a definition of the relative inclinations of a face sheet and a backwall inclined more away from a noise source than the face sheet is inclined away from the noise source.
Figure **8** is a view similar to Figure **3** further enlarged and illustrating the physical behavior of the inventive acoustic liner.
Figure **9** is a view looking parallel to the engine axis showing an acoustic liner with a backwall facing at least partly in the circumferential direction.
Figure **10** is a cross sectional side elevation view of an embodiment of the invention in which the backwall comprises a series of steps.
Figure **11** is a cross sectional side elevation view similar to Fig. **8** showing an embodiment of the invention with a curved backwall.
Figure **12** is a cross sectional side elevation view similar to that of Fig. **10** showing an embodiment in which the depth of the steps follows a curved profile.
Figure **13** is a cross sectional side elevation view showing the ramped embodiment of the invention in combination with active elements distributed along the backwall.
Figure **14** is a schematic, cross sectional side elevation view of a turbine engine exhaust nozzle according to the invention.

### Preferred Embodiments of the Invention

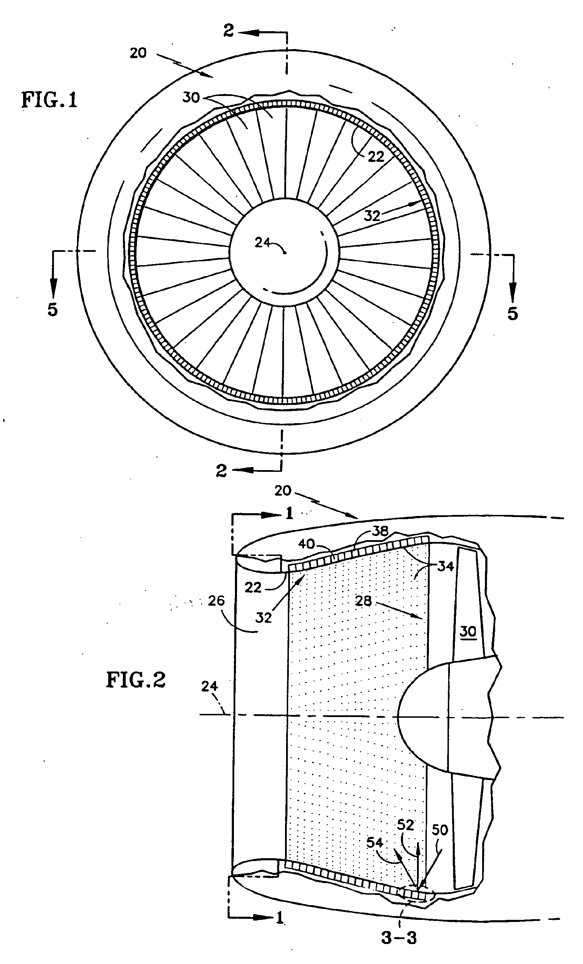

Figures **1, 2** and **5** illustrate a turbine engine inlet duct **20** defined by duct interior wall **22,** which circumscribes a duct axis **24.** The illustrated inlet duct is substantially circular in cross section when viewed parallel to the engine axis, although some inlet ducts have a noticeably less circular shape. One end **26** of the duct is open to the atmosphere. The other end of the duct, which is axially offset from the open end, is immediately forward of a compressor represented by a rotatable fan **28** having an array of blades **30.** During engine operation the fan is a source of noise.

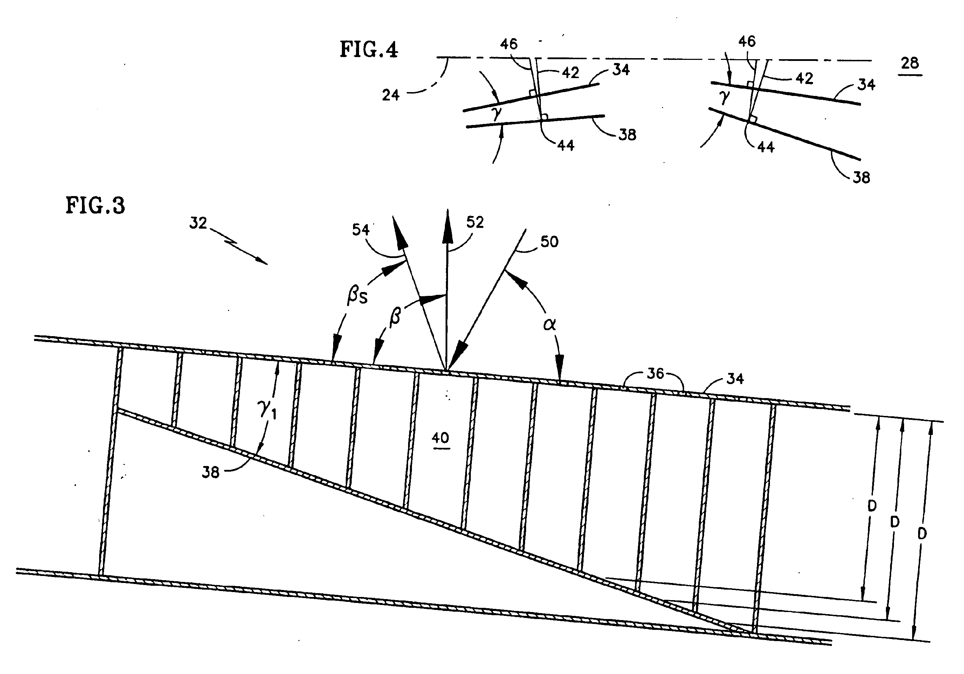

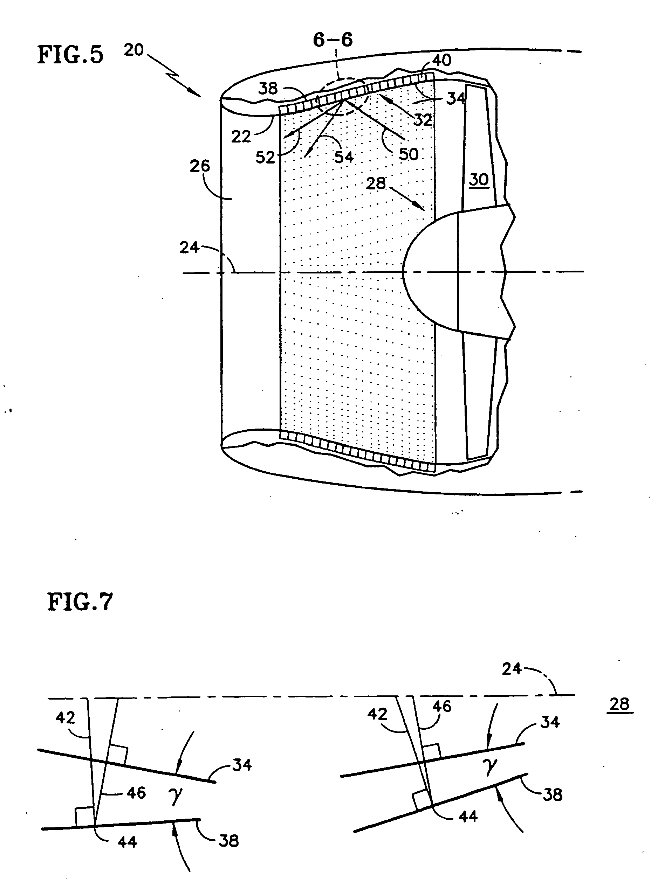

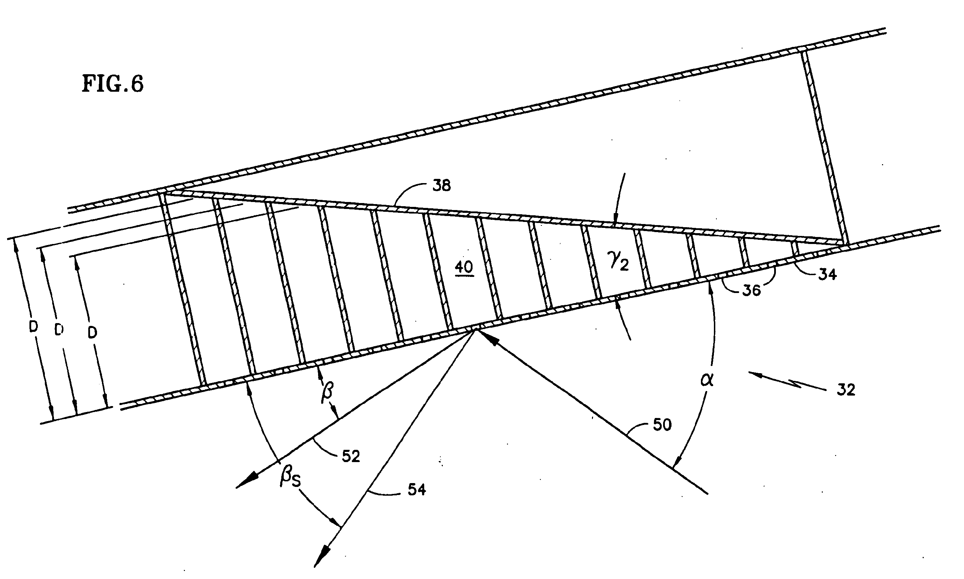

Portions of the duct interior wall **22** are lined with an acoustic liner **32.** A typical acoustic liner comprises a face sheet **34** perforated by numerous small holes **36** (visible in Figures **3** and **6****)** and an imperforate back sheet or backwall **38** spaced from the face sheet. The face sheet defines the interior contour of the duct wall as seen best in Figures **2** and **5****.** An array of resonator chambers 40 or other sound attenuator occupies the space between the face sheet and the backwall. The illustrated liner is a single layer liner, however the invention is equally applicable to multiple layer liners in which one or more separating screens or perforated separating sheets resides between the face sheet and the backwall. The liner has an acoustic impedance, which is a complex quantity whose real part is referred to as resistance and whose imaginary part is referred to as reactance. The resistance, which controls the amplitude of a reflected sound wave, is set by the dissipative nature of the face sheet and any dissipative material placed within the honeycomb cells. The reactance, which controls the phase of the reflected wave, is a measure of the capacitance of the liner and is set primarily by the depth of the liner and inductive influences associated with the holes in the face sheet. The acoustic impedance may be spatially uniform, or it may be spatially nonuniform in which case the nonuniform impedance may be used to regulate the direction of reflection as described more completely in my copending, commonly owned application (Agent's Ref: 74.90376/01) entitled "Acoustic Liner with Nonuniform Impedance" and filed concurrently herewith, the contents of which are incorporated herein by reference.

As seen in Figures **3, 4****,** **6** and **7****,** the backwall 38 has a nonuniform depth **D** relative to the face sheet **34.** Specifically, the backwall is a ramp oriented at an angle ***y* (γ₁** in Fig. **3****; γ₂** in Fig. **6****)** relative to the face sheet. As will be described in more detail below, the orientation angle **γ** is selected to direct sound waves incident upon the backwall into a prescribed direction relative to the face sheet. Typically the prescribed direction is nonspecular relative to the face sheet. In Figure **3****,** the backwall **38** is inclined more toward the noise source (the fan **28)** than the face sheet **34** is inclined toward the noise source. As shown schematically in Figure **4****,** a backwall **38** is considered to be inclined more toward a noise source **28** than the face sheet **34** is inclined toward the noise source if a first line **42** originating at an origin **44** on the backwall and extending perpendicular to the backwall crosses the duct axis **24** closer to the noise source **28** than does a second line **46** originating at the same origin **44** and extending perpendicular to the face sheet. As is evident in Figure **4****,** the foregoing is true whether the face sheet and the backwall themselves are inclined toward or away from the noise source **28.**

In Figure **6****,** the backwall is inclined more away from the noise source (the fan **28)** than the face sheet is inclined away from the noise source. As shown in schematically in Figure **7****,** a backwall is considered to be inclined more away from a noise source than the face sheet is inclined away from the noise source **28** if a first line **42** originating at an origin **44** on the backwall 38 and extending perpendicular to the backwall crosses the duct axis **24** further from the noise source **28** than does a second line **46** originating at the same origin **44** and extending perpendicular to the face sheet **34.** As is evident in Figure **7****,** the foregoing is true whether the face sheet and the backwall themselves are inclined toward or away from the noise source **28.**

Referring principally to Figures **2** and **3****,** a representative sound wave or noise signal **50** produced by the fan propagates forwardly through the inlet duct. The trajectory of the illustrated noise signal is describable by a directional component parallel to the face sheet (and therefore approximately axial) and a directional component perpendicular to the face sheet (and therefore approximately radial). The illustrated noise signal strikes the liner at an angle of incidence α and does so far from the open end 26 of the inlet duct. The backwall is oriented at angle **γ₁** to reflect any residue of the incident noise signal 50 in a prescribed direction as indicated by reflected signal 52 and its associated angle of reflection ***β*.** If the backwall were parallel to the face sheet, the signal would have reflected at a specular angle of reflection *β*ₛ and propagated along a specular trajectory **54,** i.e. a trajectory whose directional components parallel to face sheet **34** and perpendicular to face sheet **34** are equal in magnitude to the corresponding directional components of the incident signal. However, as seen in Fig's. **2** and **3,** the inventive liner causes the parallel directional component of the reflected signal **52** to be lower in magnitude than the parallel directional component of the incident signal, and the perpendicular directional component of the reflected signal to be greater in magnitude than the perpendicular directional component of the incident signal. In other words the reflected trajectory is steeper than the incident trajectory. As a result, the reflected signal has more opportunities to repeatedly reflect off the liner as it propagates toward the open end of the duct, which provides repeated opportunities for the liner to attenuate the noise signal.

Figures **5** and **6** are similar to Figures **2** and **3** but show a noise signal **50** striking the liner near the open end **26** of the inlet duct. The backwall is oriented at angle ***γ*₂** to reflect any residue of the incident noise signal **50** in a prescribed direction as indicated by reflected signal **52** and its associated angle of reflection ***β*.** If the backwall were parallel to the face sheet, the signal would have reflected at a specular angle of reflection ***βₛ*** and propagated along a specular trajectory **54,** i.e. a trajectory whose directional components parallel and perpendicular to the face sheet **34** are equal in magnitude to the corresponding directional components of the incident signal. However, as seen in Fig's **5** and **6,** the inventive liner causes the parallel directional component of the reflected signal **52** to be greater in magnitude than the parallel directional component of the incident signal, and the perpendicular directional component of the reflected signal to be lower in magnitude than the perpendicular directional component of the incident signal. In other words the reflected trajectory is shallower than the incident trajectory. As a result, the reflected signal propagates in a more axial direction and therefore is less disturbing to the surrounding community than is nonaxially propagating noise.

The prescribed direction of reflection need not be the same direction for all portions of the liner. This is evident from the foregoing examples in which portion 3-3 of the liner reflects the incident noise signal in a prescribed direction that is less axial and more radial than the incident signal whereas portion **6-6** of the liner reflects the incident signal in prescribed direction that is more axial and less radial than the incident signal.

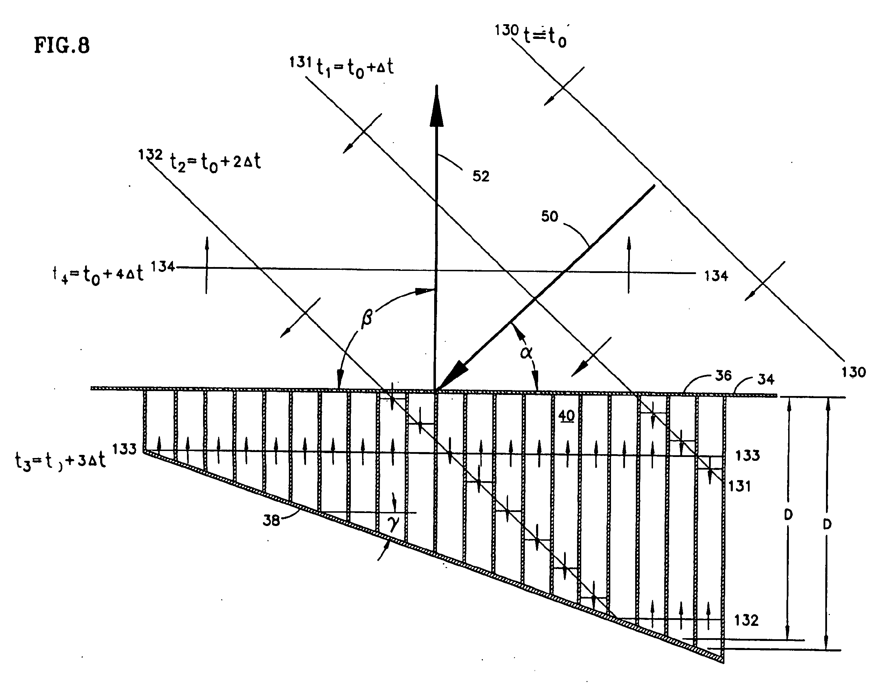

Figure **8** schematically illustrates the physical behavior of the inventive acoustic liner described above, disregarding a time delay that occurs when a sound wave passes through the face sheet. A sound wave represented by incident noise signal **50** approaches the liner surface at an incidence angle **α**. Line **130-130** represents a line of equal phase (e.g. maximum pressure crest) at time to. At a later time, **t₁ = to + Δt**, the wave has progressed forward by a distance **s₁ = c(Δt)** where c is the speed of propagation. The part of the pressure crest that had been closest to the liner face at time to has now entered the liner and has progressed toward the back wall. Thus, at time **t**₁ the pressure crest is depicted by line **131-131**. At a later time **t₂ = to + 2Δt**, the wave has progressed forward by a distance **s₂ = c(2Δt)**. At time **t₂**, part of the wave front has struck the back wall and has rebounded toward the liner face sheet. Thus, at time t₂ the pressure crest is depicted by line **132-132.** At time **t₃ = to + 3Δt,** the entire wave has struck the backwall and has rebounded toward the face sheet as depicted by line **133-133**. At time **t₄ = to + 4Δt**, the wave has exited the liner as depicted by line **134-134.** The angle ***β*** of the reflected noise signal **52** is thus seen to be equal to **α** + **2γ.** As already noted, when the backwall is inclined more toward the incident sound wave, the nonuniform depth backwall will vector the sound wave more radially (or even back towards the source for large enough inclinations). When the backwall is inclined more away from the incident sound wave the nonuniform depth backwall will vector the sound wave in a more axial direction within the duct. For the example shown in Figure **8**, the incidence angle is 45 degrees and the angle of the backwall is 22.5 degrees. Thus, the angle of reflection is 90 degrees (i.e. perpendicular to the liner face). The designer can use the relationship ***β* = α + 2γ** to define the inclination of the backwall required to prescribe a desired angle of reflection ***β*** at any given location within the duct. When using the above relationship, ***γ*** is positive if the backwall is inclined more toward the noise source than the face sheet is inclined toward the noise source, and ***γ*** is negative if the backwall is inclined more away from the noise source than the face sheet is inclined away from the noise source.

The prescribed direction will ordinarily be a nonspecular direction relative to the face sheet, however some portions of the backwall may be locally oriented to achieve a specular reflection relative to the face sheet if such a direction is consistent with noise attenuation goals or if it is necessary to form a transition between portions of the backwall that each reflect nonspecularly relative to the face sheet.

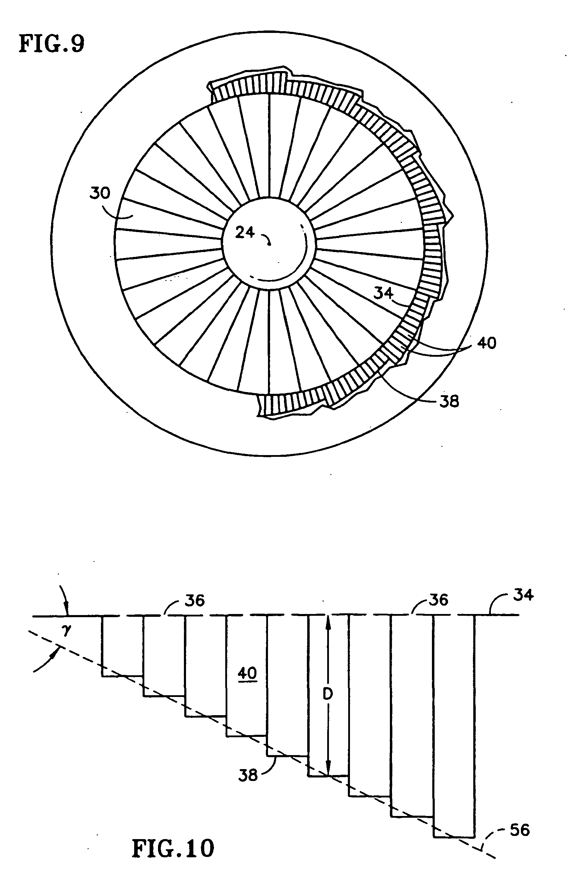

The above examples show incident noise signals with both axial and radial directional components. However noise signals radiating from engine fans typically exhibit spinning modes that propagate toward the liner with a spiral motion. Such incident sound waves have a circumferential component in addition to axial and radial components. Therefore, as seen in Figure **9****,** the acoustic liner may be inclined to face at least partially in the circumferential direction to redirect the reflected noise signals in the most desirable prescribed direction.

Figures **3****,** **6** and **8** show a backwall 38 in the form of a ramp, however substantially the same reflective effect may be achieved with a backwall formed as a series of steps as illustrated in Fig. **10****.** The illustration shows an acoustic liner whose backwall is oriented at a constant orientation angle ***γ*** relative to the face sheet as indicated by meanline **56.**

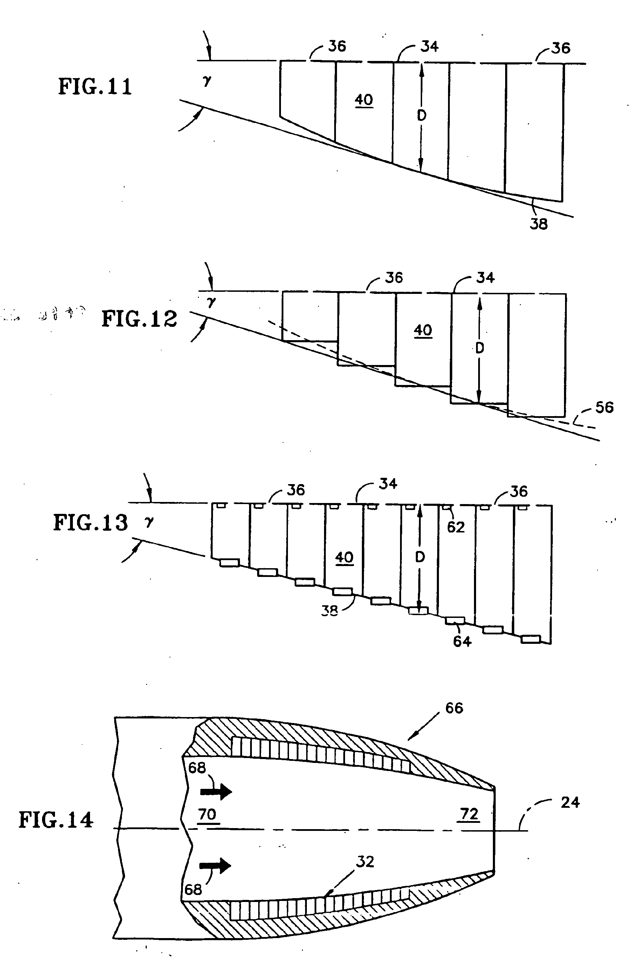

Although the examples discussed herein show linear backwalls forming a constant angle ***γ*** with the face sheet, the backwall can be curved or nonlinear as seen in Figures **11** and **12** so that the orientation angle ***γ*** between the face sheet **34** and a line tangent to the backwall (or tangent to the meanline **56)** varies with axial distance. The depth **D** also varies with axial distance according to a nonlinear profile.

Referring to Fig. **13****,** the present invention may be used in combination with an active backwall. As illustrated schematically in Fig. **13****,** an active backwall includes vibratory elements **64** such as piezoelectric flat panel actuators. A control system responds to acoustic sensors **62** by signaling the actuators to vibrate at an amplitude and a phase angle (relative to an incident noise signal) that causes the impedance of the liner to vary with time and to do so in a way that optimizes attenuation of an incident noise signal. The use of the variable depth backwall in combination with active elements may reduce the operational demands on the active elements leading to an accompanying reduction in the power required to drive them.

The invention, although described in the context of a turbine engine inlet duct, is equally applicable to other types of ducts, including exhaust ducts such as the fan and core engine exhaust ducts of turbine engines. As seen in the schematically illustrated exhaust duct **66** of Fig. **14****,** the noise source is hot, high velocity exhaust gases **68** entering upstream end **70** of the duct. The noise propagates downstream toward the open or downstream end **72** of the duct.

Although this invention has been shown and described with reference to a specific embodiment thereof, it will be understood by those skilled in the art that various changes in form and detail may be made without departing from the invention as set forth in the accompanying claims.

## Claims

1. A fluid handling duct (20) including an acoustic liner (32) comprising a face sheet (34) and a backwall (38) spaced from the face sheet (34), the backwall (38) being inclined relative to the face sheet (34) such that the backwall (38) has a nonuniform depth (D) relative to the face sheet (34), the nonuniform depth (D) being selected to direct sound waves incident on the backwall (38) in a prescribed direction relative to the face sheet (34), **characterised in that** the backwall (38) is inclined at an angle γ relative to the face sheet (34) such that a sound wave incident on the face sheet (34) at an angle α is reflected at an angle β relative to the face sheet (34) according to the relationship β = α + 2γ.

2. The duct of claim **1** wherein the backwall (38) comprises a ramp.

3. The duct of claim **1** or **2** wherein the backwall (38) comprises a series of steps.

4. The duct of claim **1, 2** or **3** wherein the backwall (38) is nonlinear.

5. The duct of any preceding claim wherein the angle β is nonspecular relative to the face sheet (34).

6. The duct of any preceding claim wherein the backwall (38) is inclined more toward an approaching noise signal than the face sheet (34) is inclined toward the noise signal.

7. The duct of any of claims **1** to **5** wherein the backwall (38) is inclined more away from an approaching noise signal than the face sheet (34) is inclined away from the noise signal.

8. The duct of any preceding claim wherein the duct (20) is substantially circular when viewed parallel to the axis.

9. The duct of claim **8** wherein the prescribed direction has axial and radial components.

10. The duct of any preceding claim wherein the duct (20) is a turbine engine inlet duct and wherein a compressor is a noise source that introduces noise into the duct.

11. The duct of any of claims **1** to **9** wherein the duct (20) is a turbine engine exhaust duct and wherein a stream of exhaust gases entering an upstream end of the duct is a noise source.

12. The duct of any preceding claim wherein the liner (32) has a substantially uniformly distributed acoustic impedance.

13. The duct of any preceding claim wherein the liner (32) comprises an active backwall (38).

14. The duct of any preceding claim wherein an array of resonator chambers (40) occupies the lateral space between the face sheet (34) and the backwall (38).

15. The duct of any preceding claim wherein the acoustic liner (32) is a single layer liner.

## Patentansprüche

1. Fluidführungskanal (20), der eine akustische Auskleidung (32) beinhaltet, mit einem Decklagen-Flächenkörper (34) und einer Rückwand (38), die von dem Decklagen-Flächenkörper (34) beabstandet ist, wobei die Rückwand (38) relativ zu dem Decklagen-Flächenkörper (34) derart geneigt ist, dass die Rückwand eine ungleichmäßige Tiefe (D) in Bezug auf den Decklagen-Flächenkörper (34) aufweist, wobei die ungleichmäßige Tiefe (D) derart gewählt ist, dass auf die Rückwand (38) auftreffende Schallwellen in einer vorbestimmten Richtung relativ zu dem Decklagen-Flächenkörper (34) gerichtet werden,
**dadurch gekennzeichnet, dass** die Rückwand (38) in einem Winkel γ relativ zu dem Decklagen-Flächenkörper (34) derart geneigt ist, dass eine in einem Winkel α auf den Decklagen-Flächenkörper (34) auftreffende Schallwelle relativ zu dem Decklagen-Flächenkörper (34) in einem Winkel β gemäß der Beziehung β = α + 2γ reflektiert wird.

2. Kanal nach Anspruch 1,
wobei die Rückwand (38) eine Rampe aufweist.

3. Kanal nach Anspruch 1 oder 2,
wobei die Rückwand (38) eine Reihe von Stufen aufweist.

4. Kanal nach Anspruch 1, 2 oder 3,
wobei die Rückwand (38) nicht linear ist.

5. Kanal nach einem der vorhergehenden Ansprüche,
wobei der Winkel β relativ zu dem Decklagen-Flächenkörper (34) kein Reflexionswinkel ist.

6. Kanal nach einem der vorhergehenden Ansprüche,
wobei die Rückwand (38) mehr in Richtung eines sich nähernden Rauschsignals geneigt ist als der Decklagen-Flächenkörper (34) in Richtung des Rauschsignals geneigt ist.

7. Kanal nach einem der Ansprüche 1 bis 5,
wobei die Rückwand (38) mehr von einem sich nähernden Rauschsignal weg geneigt ist als der Decklagen-Flächenkörper (34) von dem Rauschsignal weg geneigt ist.

8. Kanal nach einem der vorhergehenden Ansprüche,
wobei der Kanal (20) bei Betrachtung parallel zu der Achse im Wesentlichen kreisförmig ist.

9. Kanal nach Anspruch 8,
wobei die vorbestimmte Richtung axiale und radiale Komponenten aufweist.

10. Kanal nach einem der vorhergehenden Ansprüche,
wobei der Kanal (20) ein Turbinenmaschinen-Einlasskanal ist, und wobei ein Kompressor eine Rauschquelle ist, die Rauschen in den Kanal einbringt.

11. Kanal nach einem der Ansprüche 1 bis 9,
wobei der Kanal (20) ein Turbinenmaschinen-Austrittskanal ist, und wobei ein an einem stromaufwärtigen Ende des Kanals eintretender Abgasstrom eine Rauschquelle ist.

12. Kanal nach einem der vorhergehenden Ansprüche,
wobei die Auskleidung (32) eine im Wesentlichen gleichmäßig verteilte akustische Impedanz aufweist.

13. Kanal nach einem der vorhergehenden Ansprüche,
wobei die Auskleidung (32) eine aktive Rückwand (38) aufweist.

14. Kanal nach einem der vorhergehenden Ansprüche,
wobei eine Anordnung von Resonanzkammern (40) den seitlichen Raum zwischen dem Decklagen-Flächenkörper (34) und der Rückwand (38) einnimmt.

15. Kanal nach einem der vorhergehenden Ansprüche,
wobei die akustische Auskleidung (32) eine Einzellagen-Auskleidung ist.

## Revendications

1. Conduit de manipulation de fluide (20) comprenant un garnissage acoustique (32) comprenant une feuille de face (34) et une paroi arrière (38) espacée de la feuille de face (34), la paroi arrière (38) étant inclinée par rapport à la feuille de face (34) de sorte que la paroi arrière (38) ait une profondeur non uniforme (D) par rapport à la feuille de face (34), la profondeur non uniforme (D) étant choisie pour diriger les ondes sonores incidentes sur la paroi arrière (38) dans une direction prescrite par rapport à la feuille de face (34), **caractérisé en ce que** la paroi arrière (38) est inclinée d'un angle γ par rapport à la feuille de face (34) de sorte qu'une onde sonore incidente sur la feuille de face (34) sous un angle α soit réfléchie sous un angle β par rapport à la feuille de face (34) selon la relation β = α + 2γ.

2. Conduit selon la revendication 1, dans lequel la paroi arrière (38) comprend une rampe.

3. Conduit selon la revendication 1 ou la revendication 2, dans lequel la paroi arrière (38) comprend une série de gradins.

4. Conduit selon la revendication 1, 2 ou 3, dans lequel la paroi arrière (38) n'est pas linéaire.

5. Conduit selon l'une quelconque des revendications précédentes, dans lequel l'angle β est diffus par rapport à la feuille de face (34).

6. Conduit selon l'une quelconque des revendications précédentes, dans lequel la paroi arrière (38) est inclinée plus vers un signal de bruit approchant que la feuille de face (34) ne l'est vers le signal de bruit.

7. Conduit selon l'une quelconque des revendications 1 à 5, dans lequel la paroi arrière (38) est inclinée plus pour s'écarter d'un signal de bruit approchant que la feuille de face (34) ne n'est pour s'écarter du signal de bruit.

8. Conduit selon l'une quelconque des revendications précédentes, dans lequel le conduit (20) est sensiblement circulaire lorsqu'on l'observe parallèlement à l'axe.

9. Conduit selon la revendication 8, dans lequel la direction prescrite a des composantes axiale et radiale.

10. Conduit selon l'une quelconque des revendications précédentes, dans lequel le conduit (20) est un conduit d'entrée de moteur à turbine et dans lequel un compresseur est une source de bruit qui introduit du bruit dans le conduit.

11. Conduit selon l'une quelconque des revendications 1 à 9, dans lequel le conduit (20) est un conduit d'échappement de moteur à turbine et dans lequel un courant de gaz d'échappement pénétrant dans une extrémité amont du conduit est une source de bruit.

12. Conduit selon l'une quelconque des revendications précédentes, dans lequel le garnissage (32) a une impédance acoustique distribuée de manière sensiblement uniforme.

13. Conduit selon l'une quelconque des revendications précédentes, dans lequel le garnissage (32) comprend une paroi arrière active (38).

14. Conduit selon l'une quelconque des revendications précédentes, dans lequel un réseau de chambres de résonance (40) occupe l'espace latéral entre la feuille de face (34) et la paroi arrière (38).

15. Conduit selon l'une quelconque des revendications précédentes, dans lequel le garnissage acoustique (32) est un garnissage monocouche.
